# EUROPÄISCHE PATENTSCHRIFT

(11) **EP 2 323 862 B1**
(45) Veröffentlichungstag und Bekanntmachung des Hinweises auf die Patenterteilung: **12.10.2016**
(21) Anmeldenummer: 09781793.6
(22) Anmeldetag: 13.08.2009
(51) Int. Cl.: B60K 6/485, B60K 6/52, B60W 20/00, B60W 10/06, B60W 10/08, B60W 10/10, B60K 17/04, F16H 61/16, F16H 61/12, B60K 1/02

(54) **VERFAHREN UND VORRICHTUNG ZUM BETREIBEN EINES HYBRIDANTRIEBES FÜR EIN FAHRZEUG**
METHOD AND DEVICE FOR OPERATING A HYBRID DRIVE FOR A VEHICLE
PROCÉDÉ ET DISPOSITIF POUR FAIRE FONCTIONNER UN ENTRAÎNEMENT HYBRIDE POUR UN VÉHICULE

(30) Priorität: 16.09.2008 DE 102008042132
(43) Veröffentlichungstag der Anmeldung: 25.05.2011
(73) Patentinhaber: Robert Bosch GmbH, 70442 Stuttgart (DE)
(72) Erfinder: HUBER, Thomas, 74915 Daisbach (DE)
(86) Internationale Anmeldenummer: PCT/EP2009/060485
(87) Internationale Veröffentlichungsnummer: WO 2010/031645

(56) Entgegenhaltungen:
- EP-A- 1 724 142
- AT-U1- 9 756
- DE-A1-102005 001 507
- DE-A1-102005 022 314
- DE-A1-102005 044 268
- DE-A1-102005 044 828
- DE-A1-102006 018 438
- DE-A1-102006 036 443
- DE-A1-102006 046 419

## Beschreibung

Die Erfindung betrifft ein Verfahren zum Betreiben eines Hybridantriebes für ein Fahrzeug, bei welchem ein erstes Antriebsaggregat eine erste Achse des Fahrzeuges antreibt, während ein zweites Antriebsaggregat eine zweite Achse des Fahrzeuges antreibt, wobei beide Antriebsaggregate gemeinsam die Leistung des Fahrzeuges bestimmen sowie eine Vorrichtung zur Durchführung des Verfahrens.

Es werden verstärkt Fahrzeuge mit Hybridantrieben entwickelt, bei welchen verschiedene Antriebe für eine Antriebsaufgabe genutzt werden. Dabei können die einzelnen Motoren in dem Hybridantrieb unterschiedlich zusammenarbeiten. Sie wirken entweder gleichzeitig oder es wirkt nur eine Antriebseinheit auf das zu bewegende Fahrzeug.

Bei den so genannten Parallelhybriden befindet sich ein elektrischer Antrieb auf der Welle eines Verbrennungsmotors. Ein Verfahren zur Bestimmung eines Leistungsaufteilungsfaktors für ein solches Fahrzeug, bei welchem beide Antriebsaggregate einen Beitrag zur Leistung des Fahrzeugs einbringen, ist aus der DE 103 23 722 A1 bekannt. Bei diesem Verfahren wird eine Kostenfunktion minimiert, die von dem Leistungsaufteilfaktor abhängt. Durch Bestimmung des Minimums der Kostenfunktion wird ein solcher Leistungsaufteilfaktor ermittelt, für den der geringste Brennstoffverbrauch benötigt wird.

Neben den Parallelhybridfahrzeugen sind Hybridkonzepte bekannt, welche eine separat elektrisch angetriebene Fahrzeugachse aufweisen.

Aus dem Stand der Technik ist zum Beispiel die DE 10 2006 046 419 A1 bekannt. Diese betrifft eine elektrische Achsantriebsbaugruppe für eine Achse eines Fahrzeugs, mit einer elektrischen Maschine, deren Abtrieb mit dem Eingang einer Übersetzungseinrichtung verbindbar ist, und mit einem Differentialgetriebe, dessen Eingangsglied mit einem Ausgang der Übersetzungseinrichtung verbunden ist und dessen Ausgangsglieder mit einer linken beziehungsweise einer rechten Antriebswelle der Achse verbindbar sind. Es ist vorgesehen, dass wenigstens eine Übersetzungsstufe der Übersetzungseinrichtung und das Differentialgetriebe in Achsrichtung auf entgegengesetzten Seiten der elektrischen Maschine angeordnet sind, wobei das Differentialgetriebe über eine Hohlwelle mit der Übersetzungsstufe verbunden ist.

Weiter zeigt die AT 009 756 U1 ein Verfahren zur Steuerung des Hybridantriebes eines Kraftfahrzeuges und ein entsprechendes Steuersystem. Dabei ist eine Verbrennungskraftmaschine, ein Schaltgetriebe, mindestens eine elektrische Maschine, mindestens eine Kupplung und ein Energiespeicher, und mindestens eine angetriebene Achse vorgesehen. Mit dem Verfahren und dem Steuersystem sollen maximaler Wirkungsgrad und Lebensdauer der Komponenten erreicht werden. Dazu wird ausgehend von einem Fahrerwunsch und einem Betriebszustand entschieden, welche Betriebsmodi möglich sind. Anschließend wird für die möglichen Betriebsmodi entschieden, welche Getriebegänge in Frage kommen, sodass eine größere Anzahl von Modi zur Auswahl steht. Für alle diese Modi werden dem Fahrerwunsch entsprechende Arbeitspunkte unter Berücksichtigung von Betriebszustand und Systemzustand ermittelt. Schließlich werden die Modi bewertet und der am günstigsten bewertete Modus ausgewählt.

### Offenbarung der Erfindung

Das erfindungsgemäße Verfahren zum Betreiben eines einen Hybridantrieb aufweisenden Fahrzeugs mit den Merkmalen des Anspruchs 1 weist den Vorteil auf, dass eine optimale Leistungsaufteilung bei Achshybridkonzepten gegeben ist. Zur Leistungsaufteilung des Fahrzeugs werden alle möglichen Übersetzungen des mit einem ersten Getriebe verbundenen ersten Antriebsaggregates und des mit einem zweiten Getriebe verbundenen zweiten Antriebsaggregates bestimmt, wobei für alle Kombinationen von Übersetzungen der beiden Getriebe in Abhängigkeit von einem Fahrerwunsch ein Gütekriterium für die Übersetzungen und Drehmomente für das erste und das zweite Antriebsaggregat bestimmt wird. Durch den Algorithmus werden gleichzeitig Vorgaben für die Sollmomente der vorhandenen beiden Antriebsaggregate als auch Vorgaben für die Übersetzungsverhältnisse der beiden Getriebe erzeugt. Auf eine vorherige Bestimmung einer Drehzahl der Antriebsaggregate kann dabei verzichtet werden.

Die Übersetzungen für beide den Antriebsaggregaten zugeordneten Getriebe mit dem jeweils zugehörigen Gütekriterium und den Drehmomenten für das erste und das zweite Antriebsaggregat werden in einer Tabelle hinterlegt, welche zur Steuerung und/oder Regelung der Antriebsaggregate genutzt wird. Bei einer Änderung des Fahrerwunsches, der Fahrzeuggeschwindigkeit, dem elektrischen Energiebedarf des Fahrzeuges bei der Verwendung eines Elektromotors als ein Antriebsaggregat oder dem Ladezustand der Traktionsbatterie können sofort die Übersetzungsverhältnisse der beiden Getriebe und die Solldrehmomente der beiden Antriebsaggregate aus der Tabelle ausgelesen und an den Antriebsaggregaten eingestellt werden, sodass zu jedem Zeitpunkt eine optimale Leistungsaufteilung zwischen den beiden Antriebsaggregaten gegeben ist. Mittels der Übersetzungen sind jederzeit Rückschlüsse auf die Drehzahl der Antriebsaggregate des Fahrzeuges möglich.

Aus der Tabelle werden die Soll-Übersetzungen des ersten und des zweiten Antriebsaggregates anhand des Gütekriteriums mit dem kleinsten Wert ausgelesen. Mittels des Gütekriteriums wird die beste Kombination der Übersetzungen aus der Tabelle bestimmt, die energietechnisch den verbrauchsärmsten Antrieb des Fahrzeuges ermöglicht.

Die so ermittelten Soll-Übersetzungen werden an eine Getriebesteuereinheit übermittelt, welche die Soll-Übersetzungen anhand der aktuellen Antriebsbedingungen prüft und den aktuellen Antriebsbedingungen entsprechende Ist-Übersetzungen an den Getrieben der beiden Antriebsaggregate einstellt. Somit wird sichergestellt, dass immer die aus Sicht des Getriebesteuergerätes besten Übersetzungen eingestellt werden.

Bei einem Unterschied zwischen den von dem Getriebesteuergerät eingestellten Übersetzungen und den Soll-Übersetzungen aus der Tabelle wird auf jeden Fall sichergestellt, dass auch Aspekte berücksichtigt wurden, die bei der Bestimmung der Soll-Übersetzungen keine Beachtung fanden.

Bei Übereinstimmung der Ist-Übersetzungen mit den ermittelten Soll-Übersetzungen werden die zu den Soll-Übersetzungen in der Tabelle abgelegten Drehmomente an den beiden Antriebsaggregaten eingestellt und so die optimale Leistungsaufteilung der beiden Antriebsaggregate erreicht.

Erfindungsgemäß wird an einem Getriebe eines Antriebsaggregates die ermittelte Soll-Übersetzung eingestellt, während die Übersetzung für das andere Getriebe des anderen Antriebsaggregates in Abhängigkeit des Fahrerwunsches und/oder der Fahrzeuggeschwindigkeit und/oder der am Getriebe eingestellten Übersetzung und/oder dem Soll-Drehmoment, welches mit der an dem Getriebe des Antriebsaggregates eingestellten Soll-Übersetzung korreliert, bestimmt wird. Das erfindungsgemäße Verfahren berücksichtigt somit auch den Fall, dass nur eine ermittelte Soll-Übersetzung sich als optimal erwiesen hat. Für diese Soll-Übersetzung wird das Soll-Drehmoment aus der Tabelle entnommen, während für das andere Antriebsaggregat das Solldrehmoment berechnet werden muss, da nur so eine optimale Leistungsaufteilung zwischen den beiden Antriebaggregaten erreicht werden kann.

In einer besonders vorteilhaften Ausführung wird die optimale Leistungsaufteilung dadurch erzielt, dass der Wert des Gütekriteriums in Abhängigkeit vom eingesetzten Kraftstoff des als Verbrennungsmotor ausgebildeten ersten Antriebaggregates und der elektrischen Energie des als Elektromotor ausgebildeten zweiten Antriebsaggregates bestimmt wird. Da sich aus den Kombinationen von Übersetzungen anhand der Fahrgeschwindigkeit die Drehzahlen für den Verbrennungsmotor und den Elektromotor ermitteln lassen, lässt sich mittels dieser Drehzahlen und dem Fahrerwunsch der Wert des Gütekriteriums feststellen, welches beispielsweise die von dem Elektromotor aufgebrachte elektrische Energie und den vom Verbrennungsmotor eingesetzten Kraftstoff gegeneinander gewichtet.

Es besteht aber auch die Möglichkeit, dass der Wert des Gütekriteriums in Abhängigkeit von der als Verbrennungsmotor ausgebildeten ersten Antriebsaggregats erzeugten Schadstoffemission bestimmt wird. Somit könnte aber auch festgestellt werden, dass unter gegebenen Bedingungen ein rein elektrisches Fahren eine bessere Alternative darstellt, als der gemeinsame Antrieb des Fahrzeuges durch den Verbrennungsmotor und den Elektromotor.

In einer Ausgestaltung werden die möglichen Übersetzungen für das erste Getriebe des ersten Antriebaggregats und für das zweite Getriebe des zweiten Antriebsaggregats eingeschränkt, indem bei einer vorgegebenen Fahrzeuggeschwindigkeit solche Übersetzungen eliminiert werden, welche eine Über- oder Unterschreitung einer Drehzahlschwelle und/oder eine Über- oder Unterschreitung einer Drehmomentschwelle bewirken. Somit wird verhindert, dass bei der aktuellen Fahrzeuggeschwindigkeit ein Antriebsaggregat durch die Wahl einer Übersetzung außerhalb seines zulässigen Betriebsbereiches sowohl hinsichtlich Drehzahl als auch Drehmoment betrieben wird.

In einer weiteren Weiterbildung der Erfindung ist eine Vorrichtung zum Betreiben eines Hybridantriebes für ein Fahrzeug vorgesehen, bei welchem ein erstes Antriebsaggregat eine erste Achse des Fahrzeuges antreibt, während ein zweites Antriebaggregat eine zweite Achse des Fahrzeuges antreibt, wobei beide Antriebsaggregate gemeinsam die Leistung des Fahrzeuges bestimmen. Um eine optimale Leistungsaufteilung der Antriebsaggregate bei Achshybridkonzepten einzustellen, werden alle möglichen Übersetzungen des mit einem ersten Getriebe verbundenen ersten Antriebsaggregates und des mit einem zweiten Getriebe verbundenen zweiten Antriebsaggregates bestimmt, wobei Mittel vorhanden sind, die für alle Kombinationen von Übersetzungen der beiden Getriebe in Abhängigkeit vom einem Fahrerwunsch ein Gütekriterium für die Übersetzungen und Drehmomente für das erste und das zweite Antriebaggregat bestimmen. Diese Vorrichtung hat den Vorteil der gleichzeitigen Bestimmung von den jeweiligen Getriebeübersetzungen sowie der Bestimmung der Soll-Drehmomente für die Antriebsaggregate.

Dabei ermittelt ein Motorsteuergerät des ersten Antriebsaggregates die Kombinationen der Übersetzungen, das Gütekriterium und die Drehmomente für das erste und das zweite Antriebsaggregat und speichert diese in einer Tabelle ab. Die Tabelle enthält dabei vorteilhafterweise alle möglichen Kombinationen der Übersetzungen, denen das jeweilige Solldrehmoment der einzelnen Antriebaggregate zugeordnet ist.

Das Motorsteuergerät des ersten Antriebsaggregates ist zur Ermittlung des Fahrerwunsches mit einem Fahrpedalgeber verbunden und führt gleichzeitig an eine Getriebesteuereinheit, welcher das Motorsteuergerät die Soll-Übersetzungen beider Antriebsaggregates übermittelt, die das Motorsteuergerät des ersten Antriebsaggregates in Abhängigkeit von dem besten Gütekriterium aus der Tabelle ausgelesen hat. Durch die Verwendung der an sich im Fahrzeug vorhandenen Steuergeräte lässt sich die Leistungsaufteilung der beiden Antriebsaggregate ohne zusätzlichen Aufwand an Hardware kostengünstig ermitteln.

Das Getriebesteuergerät prüft die übermittelten Soll-Übersetzungen in Abhängigkeit der aktuellen Antriebssituation des Fahrzeuges und meldet dem Motorsteuergerät des ersten Antriebsaggregates die tatsächlich eingestellten Ist-Übersetzungen zurück. Somit ist sichergestellt, dass das Getriebesteuergerät die Priorität über die Einstellung der Übersetzungen an den beiden Getrieben behält, um sicherzustellen, dass alle sich aus der aktuellen Fahrsituation des Fahrzeuges ergebenden Bedingungen berücksichtigt werden.

In einer Ausgestaltung wählt das Motorsteuergerät anhand der von dem Getriebesteuergerät gemeldeten Ist-Übersetzungen aus der Tabelle die zugehörigen Soll-Drehmomente aus und gibt diese an die Antriebsaggregate weiter. Durch diese fein abgestimmte Auswahl der Solldrehmomente wird immer die optimale Leistungsaufteilung an den beiden Antriebsaggregaten erreicht.

### Kurze Beschreibung der Zeichnungen

Die Erfindung lässt zahlreiche Ausführungsformen zu. Eine davon soll anhand der in der Zeichnung dargestellten Figuren näher erläutert werden.

Es zeigt:
- Figur 1:: Prinzipdarstellung eines Hybridkonzeptes mit einer separat elektrisch angetriebenen Achse
- Figur 2:: schematisches Ablaufdiagramm eines Ausführungsbeispieles des erfindungsgemäßen Verfahrens

### Ausführungsformen der Erfindung

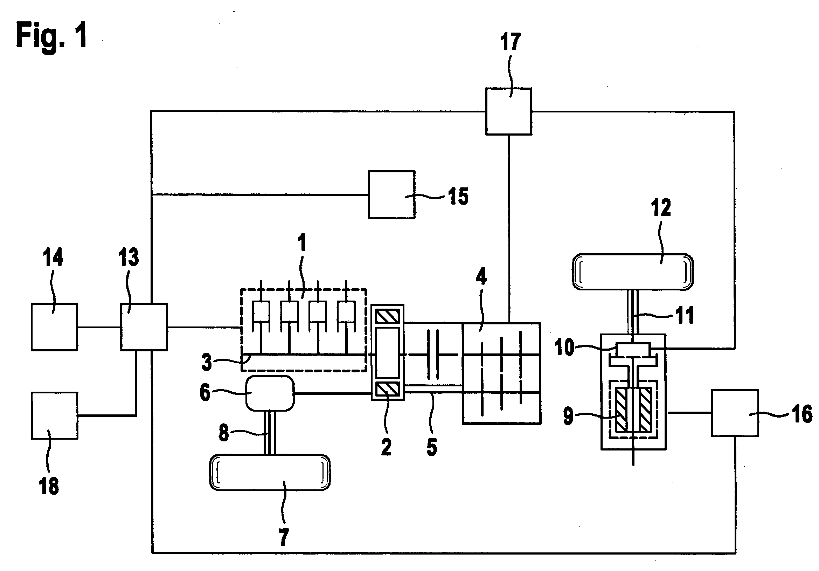

Gemäß Figur 1 sind ein Verbrennungsmotor 1 und ein erster Elektromotor 2 auf der Antriebswelle 3 des Verbrennungsmotors 1 angeordnet. Der erste Elektromotor 2 führt an eine erste Getriebeeinheit 4, welche über die Antriebswelle 5 mit einem Differential 6 verbunden ist, das das Drehmoment an eine Achse 8 weiterleitet, an welcher ein Rad 7 befestigt ist.

Ein zweiter Elektromotor 9 ist mit einer zweiten Getriebeeinheit 10 auf einer zweiten Achse 11 des Fahrzeuges montiert, wobei das von dem zweiten Elektromotor 9 erzeugte Drehmoment an ein Rad 12 weitergegeben wird, welches von der zweiten Achse 11 angetrieben wird.

Der Verbrennungsmotor 1 ist mit einem Motorsteuergerät 13 verbunden, durch welches die Abläufe im Verbrennungsmotor 1 gesteuert und geregelt werden. Das Motorsteuergerät 13 erhält Signale von einer Vielzahl von Sensoren, wovon im vorliegenden Beispiel nur der Fahrwertgeber 14, welcher mit einem von dem Fahrzeugführer betätigten Fahrpedal verbunden ist, und ein Drehzahlsensor 18 zur Ermittlung der Fahrzeuggeschwindigkeit dargestellt sind.

Darüber hinaus ist der erste Elektromotor 2 mit einem ersten Elektromotorsteuergerät 15 verbunden, während der zweite Elektromotor 9 mit einem zweiten Elektromotorsteuergerät 16 verbunden ist. Die beiden Getriebeeinheiten 4 und 10 führen an ein gemeinsames Getriebesteuergerät 17. Das Motorsteuergerät 13 ist sowohl mit dem Getriebesteuergerät 17 als auch mit dem ersten Elektromotorsteuergerät 15 und dem zweiten Elektromotorsteuergerät 16 verbunden.

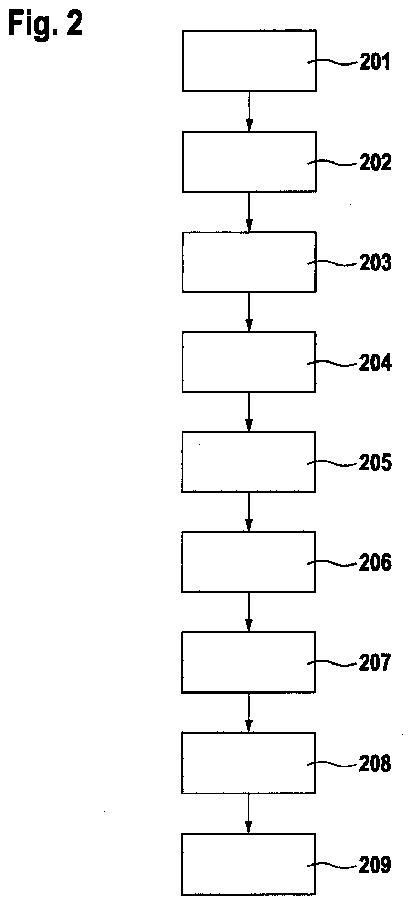

Anhand von Figur 2 soll nun eine mögliche Ausführungsform der Erfindung erläutert werden, mittels welcher eine optimale Leistungsaufteilung zwischen dem Verbrennungsmotor 1 und dem zweiten Elektromotor 9 eingestellt wird. Die optimale Leistungsaufteilung wird in diesem Beispiel mit Hilfe des Motorsteuergerätes 13 ermittelt.

Im Block 201 werden der Fahrerwunsch und die Fahrzeuggeschwindigkeit bestimmt. Der Fahrerwunsch wird dabei durch eine positive oder negative Beschleunigung charakterisiert, welche durch die Stellung des Fahrpedals 14 vorgegeben wird. Das Fahrpedal 14 kann dabei ein Gaspedal oder ein Bremspedal sein. Anhand der Stellung des Gaspedals und/oder der Stellung des Bremspedals sowie der aktuellen Fahrzeuggeschwindigkeit, welche mit dem Drehzahlsensor 18 bestimmt wurde, wird die vom Fahrer gewünschte Leistung für den Fahrzeugvortrieb ermittelt.

Im nächsten Block 202 werden alle möglichem Übersetzungen für jedes der Getriebe 4 und 10 bestimmt. Dabei werden bei jedem Getriebe 4, 10 zuerst die Drehzahlen und anschließend die Drehmomente, die jeweils auf den Verbrennungsmotor 1 und den Elektromotor 9 übertragen werden, betrachtet. Führt eine Übersetzung zur Überschreitung einer applizierbaren Drehzahlschwelle (Maximaldrehzahl) des Verbrennungsmotors 1 oder des zweiten Elektromotors 9, wird diese Übersetzung im weiteren Verlauf der Bestimmung der Leistungsaufteilung zwischen dem Verbrennungsmotor 1 und dem Elektromotor 9 nicht weiter betrachtet. Ebenso wird mit Übersetzungen verfahren, die zur Unterschreitung einer Drehzahlschwelle (Mindestdrehzahl) führen. Als Beispiel für diese Maßnahme sei hier angeführt, dass die den ersten und den zweiten Gang repräsentierenden Übersetzungen aus der weiteren Betrachtung ausgeschlossen werden, wenn die Fahrzeuggeschwindigkeit bei 130 h/km liegt.

Eine vergleichbare Betrachtung wird für die Drehmomente des Verbrennungsmotors 1 und des zweiten Elektromotors 9 angestellt, welche für die Vortriebsleistung des Fahrzeuges zuständig sind. Übersetzungen, die zum Unter- oder Überschreiten von applizierbaren Drehmomentenschwellen führen, werden ebenfalls nicht weiter berücksichtigt. Diese Momentenschwellen hängen zum Beispiel von minimalen oder maximalen Drehmomenten oder einer gewünschten Drehmomentenreserve ab. Reicht beispielsweise eine Vortriebsleistung, welcher ein fünfter Gang aufbringt, nicht aus, um den Fahrerwunsch zu realisieren, wird eine Übersetzung des vierten Ganges eingestellt, mit welcher der gewünschte Vortrieb erreicht wird. Die Übersetzung des fünften Ganges wird nun aus der weiteren Betrachtung ausgeschlossen.

Nach Ausschluss der im Block 202 ermittelten, nicht weiter verwendbaren Übersetzungen werden im Block 203 alle verbleibenden Übersetzungen der Getriebe 4 und 10 miteinander kombiniert. Im Block 204 werden für jede verbleibende Kombination von Übersetzungen der Getriebe 4 und 10 mittels der aktuellen Fahrzeuggeschwindigkeit, die Drehzahlen für den Verbrennungsmotor 1 und den zweiten Elektromotor 9 bestimmt. Mit diesen Drehzahlen und dem Fahrerwunsch wird im Block 205 mit der an sich aus der DE 10 2005 044 268 A1 bekannten Methode der Wert eines Gütekriteriums ermittelt. Das Gütekriterium stellt in diesem Fall eine Kostenfunktion für den Energieverbrauch oder den Emissionsausstoß dar, wodurch die Leistungsaufteilung zwischen dem Verbrennungsmotor 1 und dem zweiten Elektromotor 9 gesteuert oder geregelt wird. Durch Anwendung dieses Verfahrens werden sowohl die optimalen Drehmomente für den zweiten Elektromotor 9 und den Verbrennungsmotor 1 als auch der Wert des Gütekriteriums bei der optimalen Drehmomentenaufteilung berechnet. Für jede Kombination von Übersetzungen der Getriebe 4 und 10 werden nun in eine Tabelle die zugehörigen Solldrehmomente für den Verbrennungsmotor 1, den ersten Elektromotor 2 und den zweiten Elektromotor 9 sowie das für die optimale Drehmomentenaufteilung bestimmte Gütekriterium abgelegt.

Im Block 206 wird aus der Tabelle die optimale Kombination für die Übersetzungen der Getriebe 4 und 10 bestimmt. Dazu wird aus der Tabelle das Gütekriterium mit dem kleinsten Wert ausgewählt. Die dazu gehörenden Übersetzungen gelten als die Soll-Übersetzungen für die Getriebe 4 und 10. Die so ermittelten Soll-Übersetzungen werden im Block 207 von dem Motorsteuergerät 13 an das Getriebesteuergerät 17 übermittelt. Das Getriebesteuergerät 17 entscheidet, ob die übermittelten Soll-Übersetzungen eingestellt werden können und stellt nach Prüfung der aktuellen Betriebssituation der Getriebe 4 und 10 Ist-Übersetzungen ein. Diese Ist-Übersetzungen werden im Block 208 an das Motorsteuergerät 13 gesendet.

Im Block 209 prüft das Motorsteuergerät 13, ob die eingestellten Ist-Übersetzungen mit den Soll-Übersetzungen übereinstimmen. Ist dies der Fall, werden die in der Tabelle zu den Soll-Übersetzungen gehörenden optimalen Drehmomente ausgelesen. Das Motorsteuergerät 13 stellt an dem Verbrennungsmotor 1 das so ermittelte optimale Drehmoment ein und übermittel an das zweite Elektromotorsteuergerät 16 das optimale Drehmoment für den zweiten Elektromotor 9, welches durch das zweite Elektromotorsteuergerät 16 an diesem eingestellt wird.

Unterscheiden sich die Soll-Übersetzungen aber von den, durch das Getriebesteuergerät 17 eingestellten Ist-Übersetzungen, liest das Motorsteuergerät 13 aus der Tabelle die zu der Kombination der Ist-Übersetzungen gehörenden Drehmomente aus, welche in der eben beschriebenen Art und Weise am Verbrennungsmotor 1 und dem zweiten Elektromotor 9 eingestellt werden.

Stellt sich bei dem Vergleich der Soll- mit den Ist-Übersetzungen heraus, dass nur an einem Getriebe 4 die ermittelte optimale Soll-Übersetzung eingestellt werden konnte, wird für dieses eine Antriebsaggregat 1 das zugehörige Drehmoment aus der Tabelle ausgelesen und an dem Antriebsaggregat 1 eingestellt. Das Solldrehmoment für das andere Antriebsaggregat 9 wird anschließend aus dem Fahrerwunsch, der Fahrzeuggeschwindigkeit, der eingestellten Übersetzung und dem Solldrehmoment des ersten Antriebsaggregates 1 berechnet.

## Patentansprüche

1. Verfahren zum Betreiben eines Hybridantriebes für ein Fahrzeug, bei welchem ein erstes Antriebsaggregat (1) eine erste Achse (8) des Fahrzeuges antreibt, während ein zweites Antriebsaggregat (9) eine zweite Achse (11) des Fahrzeuges antreibt, wobei beide Antriebsaggregate (1,9) gemeinsam die Leistung des Fahrzeuges bestimmen, **dadurch gekennzeichnet, dass** zur Leistungsaufteilung alle möglichen Übersetzungen des mit einem ersten Getriebe (4) verbundenen ersten Antriebsaggregates (1) und des mit einem zweiten Getriebe (10) verbundenen zweiten Antriebsaggregates (9) bestimmt werden, wobei für alle Kombinationen von Übersetzungen der beiden Getriebe (4,10) in Abhängigkeit von einem Fahrerwunsch ein Gütekriterium für die Übersetzungen und Drehmomente für das erste und das zweite Antriebsaggregat (1,9) bestimmt wird, dass die Übersetzungen für beide den Antriebsaggregaten (1,9) zugeordneten Getriebe (4,10) mit dem jeweils zugehörigen Gütekriterium und den Drehmomenten für das erste und das zweite Antriebsaggregat (1,9) in einer Tabelle hinterlegt werden, welche zur Steuerung und/oder Regelung der Antriebsaggregate (1,9) genutzt wird, und dass aus der Tabelle die Soll-Übersetzungen des ersten und des zweiten Antriebsaggregates (1,9) anhand des Gütekriteriums mit dem kleinsten Wert ausgelesen werden, wobei die Soll-Übersetzungen an eine Getriebesteuereinheit (17) übermittelt werden, welche die Soll-Übersetzungen anhand der aktuellen Antriebsbedingungen prüft und den aktuellen Antriebsbedingungen entsprechende Ist-Übersetzungen an den Getrieben (4,10) der beiden Antriebsaggregate (1,9) einstellt, wobei an dem Getriebe (4,10) eines der Antriebsaggregate (1,9) die ermittelte Soll-Übersetzung eingestellt wird, während die Übersetzung für das Getriebe (4,10) des anderen der Antriebsaggregate (1,9) in Abhängigkeit des Fahrerwunsches und/oder der Fahrzeuggeschwindigkeit und/oder der am Getriebe (4,10) des einen der Antriebsaggregate (4,10) eingestellten Übersetzung und/oder dem Soll-Drehmoment, welches mit der an dem Getriebe (4,10) des einen der Antriebsaggregate (1,9) eingestellten Soll-Übersetzung korreliert, bestimmt wird.

2. Verfahren nach Anspruch 1, **dadurch gekennzeichnet, dass** bei Nichtübereinstimmung der Soll-Übersetzungen mit den durch die Getriebesteuereinheit (17) eingestellten Ist-Übersetzungen anhand der Ist-Übersetzung für die Getriebe (4,10) beider Antriebseinheiten (1,9) aus der Tabelle die zu den Ist-Übersetzungen gehörenden Drehmomente ausgelesen und an den Antriebsaggregaten (1,9) eingestellt werden.

3. Verfahren nach Anspruch 1, **dadurch gekennzeichnet, dass** der Wert des Gütekriteriums in Abhängigkeit vom eingesetzten Kraftstoff des als Verbrennungsmotor ausgebildeten ersten Antriebsaggregates (1) und der elektrischen Energie des als Elektromotor ausgebildeten zweiten Antriebsaggregates (9) bestimmt wird.

4. Verfahren nach Anspruch 1, **dadurch gekennzeichnet, dass** der Wert des Gütekriteriums in Abhängigkeit von der Schadstoffemission des als Verbrennungsmotor ausgebildeten ersten Antriebsaggregats (1) bestimmt wird.

5. Verfahren nach Anspruch 1, **dadurch gekennzeichnet, dass** die möglichen Übersetzungen für das erste Getriebe (4) des ersten Antriebsaggregats (1) und für das zweite Getriebe (10) des zweiten Antriebsaggregats (9) eingeschränkt werden, indem bei einer vorgegebenen Fahrzeuggeschwindigkeit solche Übersetzungen eliminiert werden, welche eine Über- oder Unterschreitung einer Drehzahlschwelle und/oder einer Über-oder Unterschreitung einer Drehmomentschwelle bewirken.

6. Vorrichtung zum Betreiben eines Hybridantriebes für ein Fahrzeug, bei welchem ein erstes Antriebsaggregat (1) eine erste Achse (8) des Fahrzeuges antreibt, während ein zweites Antriebsaggregat (9) eine zweite Achse (11) des Fahrzeuges antreibt, wobei beide Antriebsaggregate (1,9) gemeinsam die Leistung des Fahrzeuges bestimmen, **dadurch gekennzeichnet, dass** zur Leistungsaufteilung alle möglichen Übersetzungen des mit einem ersten Getriebe (4) verbundenen ersten Antriebsaggregates (1) und des mit einem zweiten Getriebe (10) verbundenen zweiten Antriebsaggregates (9) bestimmt werden, wobei Mittel (13) vorhanden sind, die für alle Kombinationen von Übersetzungen der beiden Getriebe (4,10) in Abhängigkeit von einem Fahrerwunsch ein Gütekriterium für die Übersetzungen und Drehmomente für das erste und das zweite Antriebsaggregat (1,9) bestimmen, dass ein Motorsteuergerät (13) des ersten Antriebsaggregates (1) die Kombinationen der Übersetzungen, das Gütekriterium und die Drehmomente für das erste und das zweite Antriebsaggregat (1,9) ermittelt und in einer Tabelle abspeichert, und dass das Motorsteuergerät (13) des ersten Antriebsaggregates (1) zur Ermittlung des Fahrerwunsches mit einem Fahrpedalgeber (14) verbunden ist und gleichzeitig an eine Getriebesteuereinheit (17) führt, welcher das Motorsteuergerät (13) die Soll-Übersetzungen übermittelt, die das Motorsteuergerät (13) des ersten Antriebsaggregates (1) in Abhängigkeit von dem besten Gütekriterium aus der Tabelle ausgelesen hat, wobei die Soll-Übersetzungen an eine Getriebesteuereinheit (17) übermittelt werden, welche die Soll-Übersetzungen anhand der aktuellen Antriebsbedingungen prüft und den aktuellen Antriebsbedingungen entsprechende Ist-Übersetzungen an den Getrieben (4,10) der beiden Antriebsaggregate (1,9) einstellt, wobei an dem Getriebe (4,10) eines der Antriebsaggregate (1,9) die ermittelte Soll-Übersetzung eingestellt wird, während die Übersetzung für das Getriebe (4,19) des anderen der Antriebsaggregate (1,9) in Abhängigkeit des Fahrerwunsches und/oder der Fahrzeuggeschwindigkeit und/oder der am Getriebe (4,10) eingestellten Übersetzung und/oder dem Soll-Drehmoment, welches mit der an dem Getriebe (4,10) des Antriebsaggregates (1,9) eingestellten Soll-Übersetzung korreliert, bestimmt wird.

7. Vorrichtung nach Anspruch 6, **dadurch gekennzeichnet, dass** das Getriebesteuergerät (17) die übermittelten Soll-Übersetzungen in Abhängigkeit der aktuellen Antriebssituation des Fahrzeuges prüft und dem Motorsteuergerät (13) des ersten Antriebsaggregates (1) die tatsächlich eingestellten Ist-Übersetzungen zurückmeldet.

8. Vorrichtung nach Anspruch 7, **dadurch gekennzeichnet, dass** das Motorsteuergerät (13) anhand der von dem Getriebesteuergerät (17) gemeldeten Ist-Übersetzungen aus der Tabelle die Soll-Drehmomente auswählt und an die Antriebsaggregate (1,9) weitergibt.

## Claims

1. Method for operating a hybrid drive for a vehicle in which a first drive assembly (1) drives a first axle (8) of the vehicle, whereas a second drive assembly (9) drives a second axle (11) of the vehicle, wherein both drive assemblies (1, 9) jointly define the power of the vehicle, **characterized in that**, for the power distribution, all possible transmission ratios of the first drive assembly (1), which is connected to a first gearbox (4), and of the second drive assembly (9), which is connected to a second gearbox (10), are defined, wherein, for all combinations of transmission ratios of the two gearboxes (4, 10), a quality criterion for the transmission ratios and torques for the first and the second drive assembly (1, 9) is defined in a manner dependent on a driver demand, **in that** the transmission ratios for both gearboxes (4, 10) assigned to the drive assemblies (1, 9) are stored, with the respectively associated quality criterion and the torques for the first and the second drive assembly (1, 9), in a table which is utilized for the control and/or regulation of the drive assemblies (1, 9), and **in that** the setpoint transmission ratios of the first and of the second drive assembly (1, 9) are read out of the table on the basis of the quality criterion with the lowest value, wherein the setpoint transmission ratios are transmitted to a gearbox control unit (17) which checks the setpoint transmission ratios on the basis of the present drive conditions and sets actual transmission ratios, corresponding to the present drive conditions, at the gearboxes (4, 10) of the two drive assemblies (1, 9), wherein the determined setpoint transmission ratio is set at the gearbox (4, 10) of one of the drive assemblies (1, 9), whereas the transmission ratio for the gearbox (4, 10) of the other of the drive assemblies (1, 9) is defined in a manner dependent on the driver demand and/or on the vehicle speed and/or on the transmission ratio set at the gearbox (4, 10) of said one of the drive assemblies (4, 10) and/or on the setpoint torque which correlates with the setpoint transmission ratio set at the gearbox (4, 10) of said one of the drive assemblies (1, 9).

2. Method according to Claim 1, **characterized in that**, in the event of non-correlation of the setpoint transmission ratios with the actual transmission ratios set by the gearbox control unit (17), the torques associated with the actual transmission ratios are read out from the table on the basis of the actual transmission ratio for the gearboxes (4, 10) of the two drive units (1, 9) and are set at the drive assemblies (1, 9).

3. Method according to Claim 1, **characterized in that** the value of the quality criterion is defined in a manner dependent on the fuel used for the first drive assembly (1), which is in the form of an internal combustion engine, and on the electrical energy of the second drive assembly (9), which is in the form of an electric motor.

4. Method according to Claim 1, **characterized in that** the value of the quality criterion is defined in a manner dependent on the pollutant emissions of the first drive assembly (1), which is in the form of an internal combustion engine.

5. Method according to Claim 1, **characterized in that** the possible transmission ratios for the first gearbox (4) of the first drive assembly (1) and for the second gearbox (10) of the second drive assembly (9) are restricted **in that**, at a predefined vehicle speed, transmission ratios which effect an exceedance or undershooting of a rotational speed threshold and/or an exceedance or undershooting of a torque threshold are eliminated.

6. Device for operating a hybrid drive for a vehicle in which a first drive assembly (1) drives a first axle (8) of the vehicle, whereas a second drive assembly (9) drives a second axle (11) of the vehicle, wherein both drive assemblies (1, 9) jointly define the power of the vehicle, **characterized in that**, for the power distribution, all possible transmission ratios of the first drive assembly (1), which is connected to a first gearbox (4), and of the second drive assembly (9), which is connected to a second gearbox (10), are defined, wherein means (13) are provided which, for all combinations of transmission ratios of the two gearboxes (4, 10), define a quality criterion for the transmission ratios and torques for the first and the second drive assembly (1, 9) in a manner dependent on a driver demand, **in that** an engine control unit (13) of the first drive assembly (1) determines the combinations of the transmission ratios, the quality criterion and the torques for the first and the second drive assembly (1, 9) and stores these in a table, and **in that** the engine control unit (13) of the first drive assembly (1) is, for the determination of the driver demand, connected to an accelerator pedal encoder (14) and simultaneously leads to a gearbox control unit (17) to which the engine control unit (13) transmits the setpoint transmission ratios that the engine control unit (13) of the first drive assembly (1) has read out from the table in a manner dependent on the best quality criterion, wherein the setpoint transmission ratios are transmitted to a control unit (17) which checks the setpoint transmission ratios on the basis of the present drive conditions and sets actual transmission ratios, corresponding to the present drive conditions, at the gearboxes (4, 10) of the two drive assemblies (1, 9), wherein the determined setpoint transmission ratio is set at the gearbox (4, 10) of one of the drive assemblies (1, 9), whereas the transmission ratio for the gearbox (4, 19) of the other of the drive assemblies (1, 9) is defined in a manner dependent on the driver demand and/or on the vehicle speed and/or on the transmission ratio set at the gearbox (4, 10) and/or on the setpoint torque which correlates with the setpoint transmission ratio set at the gearbox (4, 10) of the drive assembly (1, 9).

7. Device according to Claim 6, **characterized in that** the gearbox control unit (17) checks the transmitted setpoint transmission ratios in a manner dependent on the present drive situation of the vehicle and signals the actually set actual transmission ratios back to the engine control unit (13) of the first drive assembly (1).

8. Device according to Claim 7, **characterized in that** the engine control unit (13) selects the setpoint torques from the table, and transmits these to the drive assemblies (1, 9), on the basis of the actual transmission ratios signalled by the gearbox control unit (17).

## Revendications

1. Procédé pour faire fonctionner un groupe propulseur hybride pour un véhicule, avec lequel un premier groupe propulseur (1) entraîne un premier essieu (8) du véhicule, alors qu'un deuxième groupe propulseur (9) entraîne un deuxième essieu (11) du véhicule, les deux groupes propulseurs (1, 9) définissant ensemble la puissance du véhicule, **caractérisé en ce que** tous les rapports de démultiplication possibles du premier groupe propulseur (1) relié à une première boîte de vitesses (4) et du deuxième groupe propulseur (9) relié à une deuxième boîte de vitesses (10) sont déterminés en vue de la distribution de la puissance, un critère de qualité pour les rapports de démultiplication ainsi que les couples pour les premier et deuxième groupes propulseurs (1, 9) étant déterminés pour toutes les combinaisons de rapports de démultiplication des deux boîtes de vitesses (4, 10) en fonction d'un souhait du conducteur, **en ce que** les rapports de démultiplication pour les deux boîtes de vitesses (4, 10) associées aux groupes propulseurs (1, 9) sont enregistrés dans une table avec le critère de qualité et les couples pour les premier et deuxième groupes propulseurs (1, 9) respectivement associés, laquelle est utilisée pour la commande et/ou la régulation des groupes propulseurs (1, 9), et **en ce que** les rapports de démultiplication de consigne des premier et deuxième groupes propulseurs (1, 9) sont lus depuis la table au moyen du critère de qualité ayant la plus petite valeur, les rapports de démultiplication de consigne étant communiqués à une unité de commande de boîte de vitesses (17) qui vérifie les rapports de démultiplication de consigne au moyen des conditions de propulsion actuelles et règle les rapports de démultiplication réels correspondant aux conditions de propulsion actuelles au niveau des boîtes de vitesses (4, 10) des deux groupes propulseurs (1, 9), le rapport de démultiplication de consigne déterminé étant réglé au niveau de la boîte de vitesses (4, 10) de l'un des groupes propulseurs (1, 9) alors que le rapport de démultiplication pour la boîte de vitesses (4, 10) de l'autre des groupes propulseurs (1, 9) est déterminé en fonction du souhait du conducteur et/ou de la vitesse du véhicule et/ou du rapport de démultiplication réglé au niveau de la boîte de vitesses (4, 10) de l'un des groupes propulseurs (4, 10) et/ou du couple de consigne qui est corrélé avec le rapport de démultiplication de consigne réglé au niveau de la boîte de vitesses (4, 10) de l'un des groupes propulseurs (1, 9).

2. Procédé selon la revendication 1, **caractérisé en ce qu'**en cas de non-concordance des rapports de démultiplication de consigne avec les rapports de démultiplication réels réglés avec l'unité de commande de boîte de vitesses (17), les couples associés aux rapports de démultiplication réels sont lus dans la table au moyen du rapport de démultiplication réel pour les boîtes de vitesses (4, 10) des deux groupes propulseurs (1, 9), puis réglés au niveau des groupes propulseurs (1, 9).

3. Procédé selon la revendication 1, **caractérisé en ce que** la valeur du critère de qualité est définie en fonction du carburant utilisé par le premier groupe propulseur (1) réalisé sous la forme d'un moteur à combustion interne et de l'énergie électrique du deuxième groupe propulseur (9) réalisé sous la forme d'un moteur électrique.

4. Procédé selon la revendication 1, **caractérisé en ce que** la valeur du critère de qualité est définie en fonction des émissions de substances polluantes du premier groupe propulseur (1) réalisé sous la forme d'un moteur à combustion interne.

5. Procédé selon la revendication 1, **caractérisé en ce que** les rapports de démultiplication possibles pour la première boîte de vitesses (4) du premier groupe propulseur (1) et pour la deuxième boîte de vitesses (10) du deuxième groupe propulseur (9) sont limités **en ce qu'**à une vitesse prédéfinie du véhicule, sont éliminés les rapports de démultiplication qui provoquent un franchissement vers le haut ou vers le bas d'un seuil de vitesse de rotation et/ou un franchissement vers le haut ou vers le bas d'un seuil de couple.

6. Dispositif pour faire fonctionner un groupe propulseur hybride pour un véhicule, avec lequel un premier groupe propulseur (1) entraîne un premier essieu (8) du véhicule, alors qu'un deuxième groupe propulseur (9) entraîne un deuxième essieu (11) du véhicule, les deux groupes propulseurs (1, 9) définissant ensemble la puissance du véhicule, **caractérisé en ce que** tous les rapports de démultiplication possibles du premier groupe propulseur (1) relié à une première boîte de vitesses (4) et du deuxième groupe propulseur (9) relié à une deuxième boîte de vitesses (10) sont déterminés en vue de la distribution de la puissance, des moyens (13) étant présents qui déterminent un critère de qualité pour les rapports de démultiplication ainsi que les couples pour les premier et deuxième groupes propulseurs (1, 9) pour toutes les combinaisons de rapports de démultiplication des deux boîtes de vitesses (4, 10) en fonction d'un souhait du conducteur, **en ce qu'**un contrôleur de moteur (13) du premier groupe propulseur (1) détermine les combinaisons des rapports de démultiplication, le critère de qualité et les couples pour les premier et deuxième groupes propulseurs (1, 9) et les enregistre dans une table, et **en ce que** le contrôleur de moteur (13) du premier groupe propulseur (1) est relié à un codeur de pédale d'accélérateur (14) en vue de déterminer le souhait du conducteur et mène simultanément à une unité de commande de boîte de vitesses (17) à laquelle le contrôleur de moteur (13) communique les rapports de démultiplication de consigne que le contrôleur de moteur (13) du premier groupe propulseur (1) a lu dans la table en fonction du meilleur critère de qualité, les rapports de démultiplication de consigne étant communiqués à une unité de commande de boîte de vitesses (17) qui vérifie les rapports de démultiplication de consigne au moyen des conditions de propulsion actuelles et règle des les rapports de démultiplication réels correspondant aux conditions de propulsion actuelles au niveau des boîtes de vitesses (4, 10) des deux groupes propulseurs (1, 9), le rapport de démultiplication de consigne déterminé étant réglé au niveau de la boîte de vitesses (4, 10) de l'un des deux groupes propulseurs (1, 9) alors que le rapport de démultiplication pour la boîte de vitesses (4, 19) de l'autre des groupes propulseurs (1, 9) est déterminé en fonction du souhait du conducteur et/ou de la vitesse du véhicule et/ou du rapport de démultiplication réglé au niveau de la boîte de vitesses (4, 10) et/ou du couple de consigne qui est corrélé avec le rapport de démultiplication de consigne réglé au niveau de la boîte de vitesses (4, 10) du groupe propulseur (1, 9).

7. Dispositif selon la revendication 6, **caractérisé en ce que** le contrôleur de boîte de vitesses (17) vérifie les rapports de démultiplication de consigne communiqués en fonction de la situation de propulsion actuelle du véhicule et renvoie au contrôleur de moteur (13) du premier groupe propulseur (1) les rapports de démultiplication réels effectivement réglés.

8. Dispositif selon la revendication 7, **caractérisé en ce que** le contrôleur de moteur (13) sélectionne les couples de consigne dans la table au moyen des rapports de démultiplication réels signalés par le contrôleur de boîte de vitesses (17) et les transmet aux groupes propulseurs (1, 9).
